# EUROPEAN PATENT APPLICATION

(11) **EP 4 471 418 A1**
(43) Date of publication of application: **04.12.2024**
(21) Application number: 24179120.1
(22) Date of filing: 30.05.2024
(51) Int. Cl.: G01N 27/623, G01N 27/624

(54) **MULTIPLE COMPENSATION VOLTAGE FRACTION COLLECTION**

(30) Priority: 02.06.2023 US 202363470760 P
(71) Applicant: Thermo Finnigan LLC, San Jose, CA 95134 (US)
(72) Inventor: BELFORD, Michael, Los Altos (US)
(74) Representative: Boult Wade Tennant LLP

(57) **Abstract**

A system for collecting multiple compensation voltage fractions includes a field asymmetric-waveform ion-mobility spectrometry (FAIMS) device which receives ions generated from a sample, such as a biological sample. A mass spectrometer injection gate is configured to inject, when in an open state, ions transmitted by the FAIMS device into a mass analyzer of the mass spectrometer. A controller circuit is configured to open the injection gate and apply a dynamic compensation voltage (CV) to an electrode of the FAIMS device while the injection gate is open. The dynamic CV can have a waveform in the shape of a ramp, triangle, wavelet, sinusoid, or another shape. The dynamic CV includes CVs associated with multiple adjacent CV fractions, and the FAIMS device is configured to transmit the multiple adjacent CV fractions into the mass analyzer via the open injection gate to be scanned together by the mass analyzer in a single experiment.

## Description

### FIELD

The field is field asymmetric-waveform ion-mobility spectrometry.

### BACKGROUND

A field asymmetric-waveform ion-mobility spectrometry (FAIMS) device can be used in conjunction with a mass spectrometer to transmit a different gas phase ion population into the mass spectrometer at each compensation voltage (CV) setting. The CV setting refers to a direct current (DC) voltage applied to an electrode of the FAIMS device. This gas phase fractionation occurs within the ion source housing on a millisecond time scale and is integrated into a scan matrix of the mass spectrometer. During a typical experiment, the CV is set within a range of voltages that transmits multiply-charged ion current, generally between -30 V and -100 V. This produces enhanced signal-to-noise mass spectra that can be subsequently interrogated by post-acquisition software to determine the individual ion species distribution. Unique identifications are made at each CV in this range; however, ions that do not transmit at the CV setting will be lost to the FAIMS electrodes and cannot be identified. This generally leads to fewer identified ion species in a single-CV experiment compared to when FAIMS is not employed. Thus, a need remains for techniques which increase the number of ion species identified during each scan for mass spectrometers that utilize a FAIMS device.

### SUMMARY

According to an aspect of the present disclosure, a system includes a FAIMS device configured to receive ions from an ionization source, the ionization source configured to receive a sample and generate the ions from the sample; an injection gate configured to inject, when in an open state, ions transmitted by the FAIMS device into a mass analyzer. The system also includes a controller circuit configured to open the injection gate and apply a dynamic compensation voltage to an electrode of the FAIMS device while the injection gate is open. Other embodiments of this aspect include corresponding computer systems, apparatus, and computer programs recorded on one or more computer storage devices, each configured to perform the actions of the methods. The system may include the ionization source and a mass spectrometer, which in turn may include the mass analyzer and the injection gate. The time-varying voltage waveform includes a ramp pattern, a triangle pattern, a sawtooth pattern, and/or a wavelet pattern. The mass analyzer is configured to collectively scan the ions of the plurality of CV fractions in a single scan, and the controller circuit is configured to generate a mass spectrum representing the ions of the plurality of CV fractions based on scan data received from the mass analyzer. The controller circuit is configured to apply the dynamic CV during an opening period of the injection gate with a time-varying voltage waveform. The CV fractions associated with the plurality of CVs can include adjacent CV fractions. The FAIMS device can be configured to receive a plurality of CV fractions from the ionization source and transmit one of the CV fractions in response to application of an associated CV. The dynamic CV may include the CVs associated with the CV fractions such that more than one of the CV fractions is transmitted while the injection gate is open. In some examples, the sample is a biological sample, and the controller circuit is further configured to transmit the mass spectrum to post-acquisition software for determination of a peptide distribution of the biological sample.

According to another aspect of the disclosed technology, a method includes introducing ions from an ion source into a FAIMS device; opening an injection gate of a mass spectrometer, the mass spectrometer coupled to an outlet of the FAIMS device; and while the injection gate is open, dynamically varying a CV applied to an electrode of the FAIMS device to transmit ions from the FAIMS device into a mass analyzer of the mass spectrometer. The method can also include scanning the transmitted ions with the mass analyzer in a single scan. Scanning the transmitted ions may further include, with the mass analyzer, collectively scanning the ions of the first and second ion groups in a single scan, and where the method further may include, with a controller, receiving data from the mass analyzer including results of the single scan and generating a mass spectrum representing the ions of the first and second ion groups based on the received data. The CV applied to the electrode while the injection gate is open can have a waveform which begins at an initial voltage, ends at a final voltage, and varies between the initial voltage and the final voltage. The initial voltage and the final voltage have the same value. The waveform has a shape corresponding to a single period of a triangle waveform, a sawtooth waveform, or a wavelet waveform. The initial voltage and the final voltage have different values. The waveform has a ramp pattern. The ions introduced into the FAIMS device may include at least a first ion group and a second ion group, where the first ion group may include ions that are transmitted by the FAIMS device when a CV within a predefined range of a first CV is applied, where the second ion group may include ions that are transmitted by the FAIMS device when a CV within a predefined range of a second CV is applied, where the first and second CVs have different values, and where varying the CV applied to the electrode while the injection gate is open may include continuously varying the CV over a range of values including the first CV and the second CV to effect transmission of the ions in the first and second ion groups into the mass analyzer while the injection gate is open. The ions introduced into the FAIMS device further may include one or more additional ion groups, where the ions of each additional ion group are transmitted by the FAIMS device when a respective associated CV is applied, and where the range of values over which the CV is varied while the injection gate is open further may include the CVs associated with the additional ion groups, thereby effecting transmission of the additional ion group(s) into the mass spectrometer while the injection gate is open.

According to another aspect of the disclosed technology, a method for identifying peptides in a biological sample includes receiving, at a FAIMS device, ions generated by an ionization source from a biological sample. The ions may include a plurality of ion groups, and each ion group having an associated CV which, when applied to an electrode of the FAIMS device, causes the ion group to be transmitted by the FAIMS device. The method also includes dynamically varying the CV applied to the electrode of the FAIMS device over a range of DC voltages, the range including the CVs for at least two of the ion groups. The method also includes opening an injection gate of a mass spectrometer while applying the varying CV to the electrode to effect transmission of the at least two ion groups into a mass analyzer of the mass spectrometer. The method can also include, with the mass analyzer, collectively scanning the at least two ion groups in a single scan. In some method examples, a controller generates a mass spectrum based on the results of the single scan, and the generated mass spectrum represents the at least two ion groups. In some method examples, the mass spectrum is interrogated with post-acquisition software to determine a peptide distribution of the biological sample. In some method examples, the DC voltages within the range are greater than or equal to -100 V and less than or equal to 0 V. Opening the injection gate of the mass spectrometer while applying the varying CV to the electrode may include maintaining the injection gate of the mass spectrometer in an open state while dynamically varying the CV applied to the electrode over the range of DC voltages. In some method examples, the range of DC voltages is a first range, the method may include, after performing the single scan of the at least two ion groups, synchronously opening the injection gate of the mass spectrometer and continuously varying the CV applied to the electrode over a second range of DC voltages, the second range including the CVs associated with at least two other ion groups of the plurality of ion groups, to thereby effect transmission of the at least two other ion groups into the mass analyzer. In some method examples, the single scan is a first single scan, the mass spectrum is a first mass spectrum, and the method includes, with the mass analyzer, collectively scanning the at least two other ion groups in a second single scan. A controller can generate a second mass spectrum based on the results of the second single scan, the second mass spectrum representing the at least two other ion groups, and combine the first mass spectrum and the second mass spectrum into a third mass spectrum which represents the at least two ion groups and the at least two other ion groups. The method can further include interrogating the third mass spectrum with post-acquisition software to determine a peptide distribution within the at least two ion groups and the at least two other ion groups.

According to another aspect of the disclosed technology, one or more non-transitory computer-readable media include computer-executable instructions for causing an apparatus to perform operations. The one or more non-transitory computer-readable media also includes introducing ions from an ion source into a FAIMS device; opening an injection gate of a mass spectrometer coupled with an outlet of the FAIMS device; and while the injection gate is open, applying a dynamic CV to an electrode of the FAIMS device to transmit ions of at least two adjacent CV fractions from the FAIMS device into a mass analyzer of the mass spectrometer.

According to another aspect of the disclosed technology, a method for operating a FAIMS device includes operating the FAIMS device in a robustness mode in which a CV applied to an electrode of the FAIMS device is dynamically varied, during a single opening period of an injection gate of a mass spectrometer, within a first voltage range associated with transmission of only one CV fraction. The method also includes operating the FAIMS device in a coverage mode which includes dynamically varying the CV applied to the electrode, during a single opening period of the injection gate, within a second voltage range associated with transmission of more than one CV fraction.

The foregoing and other objects, features, and advantages of the disclosed technology will become more apparent from the following detailed description, which proceeds with reference to the accompanying figures.

### BRIEF DESCRIPTION OF THE DRAWINGS

FIG. 1 is a schematic of a mass spectrometer including a FAIMS device in which a dynamic CV is applied the FAIMS electrode to increase ion identification in each scan.
FIG. 2A is a graph of ion intensity vs. applied CV that depicts a range of CVs that result in identification of multi-charged peptides.
FIG. 2B is a graph of ion intensity vs. applied CV that depicts the loss of ions to FAIMS electrodes, resulting in inability to identify certain ions during static-CV experiments.
FIGS. 2C-D are graphs of ion intensity vs. applied CV that show the results of approaches in which multiple discrete CVs are applied to a FAIMS electrode.
FIG. 3 depicts HeLa chromatograms generated from scans performed by a mass spectrometer incorporating a FAIMS device at different CV values.
FIG. 4 depicts a graphical representation of the proteins, peptides, and peptide-spectrum matches (PSMs) identified within each CV fraction of the scan results shown in FIG. 3.
FIGS. 5A-C depict respective cross-sectional views of a FAIMS device during application of three different static CVs along with the associated graphs of transmitted ion intensity.
FIG. 5D depicts a graph comparing transmitted ion intensity for three static CV scans with transmitted ion intensity for three dynamic CV scans.
FIG. 6 is a flowchart depicting various methods in accordance with the various disclosed examples.
FIG. 7 depicts a cross-sectional view of a FAIMS device during application of a dynamic CV having a ramp waveform.
FIG. 8 depicts a cross-sectional view of a FAIMS device during application of a dynamic CV having a triangle waveform.
FIG. 9 depicts a cross-sectional view of a FAIMS device during application of a dynamic CV having a wavelet waveform.
FIGS. 10-11 are flowcharts depicting various methods in accordance with the various disclosed examples.
FIG. 12 depicts a generalized example of a suitable computing environment in which the described innovations may be implemented.

### DETAILED DESCRIPTION

### Introduction to FAIMS

FAIMS devices can be employed in conjunction with mass spectrometers, such as hybrid and tribrid mass spectrometers, to improve the identification rate of ions in a sample (e.g., the identification rate of peptides in a biological sample). Typically, a FAIMS device sits in between ionization source and a mass spectrometer and performs gas phase ion separation based on ion mobility. In particular, the FAIMS device implements differential ion mobility in which the field strength changes numerous times during the ion residence within the device. FAIMS devices include two electrodes with a gap therebetween. In some examples, the electrodes are cylindrical electrodes with one electrode disposed or positioned within the other electrode. Alternatively, the FAIMS device can have a "flat-plate" geometry in which the two electrodes form parallel plates, or some other geometry/relative electrode arrangement.

As a brief overview of FAIMS device operation, an RF DC electric field is applied in between the two electrodes , and the gas phase ion separation happens in the gap between those two electrodes. The RF offsets the ions that enter this cell and causes them to discharge towards one of the electrodes. The DC component of the electric field, referred to as the CV, is applied to compensate for that phenomenon. As discussed further below, different CV values are applied to the FAIMS electrode to compensate for different ion species. When a given CV is applied to the FAIMS electrode, the ions which are transmitted by the FAIMS (rather than discharged towards an electrode) can be referred to as the "CV fraction" associated with that CV. In some examples, the ions in the CV fraction for a given CV may also be transmitted by the FAIMS at values within a certain range (*e.g.,* 20 V) of that CV, albeit in lower quantities.

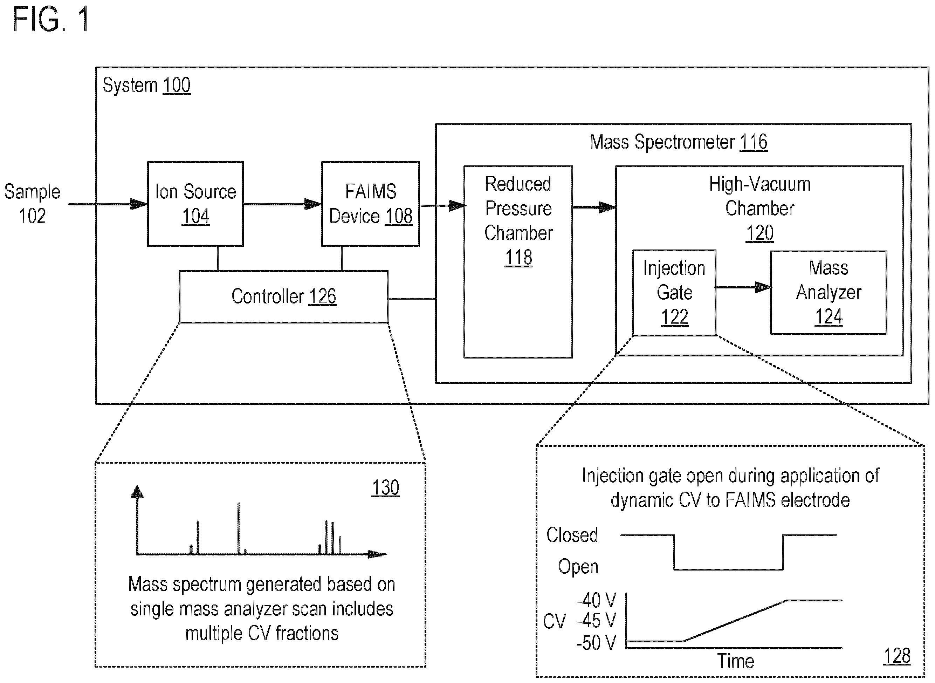

An example system 100 for analyzing multiple CV fractions in a single scan is schematically shown in FIG. 1. A sample 102, such as a biological sample containing one or more peptides, is input to an ion source 104. Ion source 104 ionizes a material under analysis (*e.g.,* sample 102) by removing or adding charge-carrying entities (*e.g*., hydrogen nuclei or electrons) to or from the material to provide the material with a positive or negative charge. This results in ions forming from the ionization of sample 102. Ion source 104 can be of the electrospray ionization (ESI) type, or can instead utilize another suitable ionization technique, including atmospheric-pressure chemical ionization (APCI) or atmospheric pressure photoionization (APPI). Ionization of the sample will typically produce both singly-charged ions and multiply-charged ions.

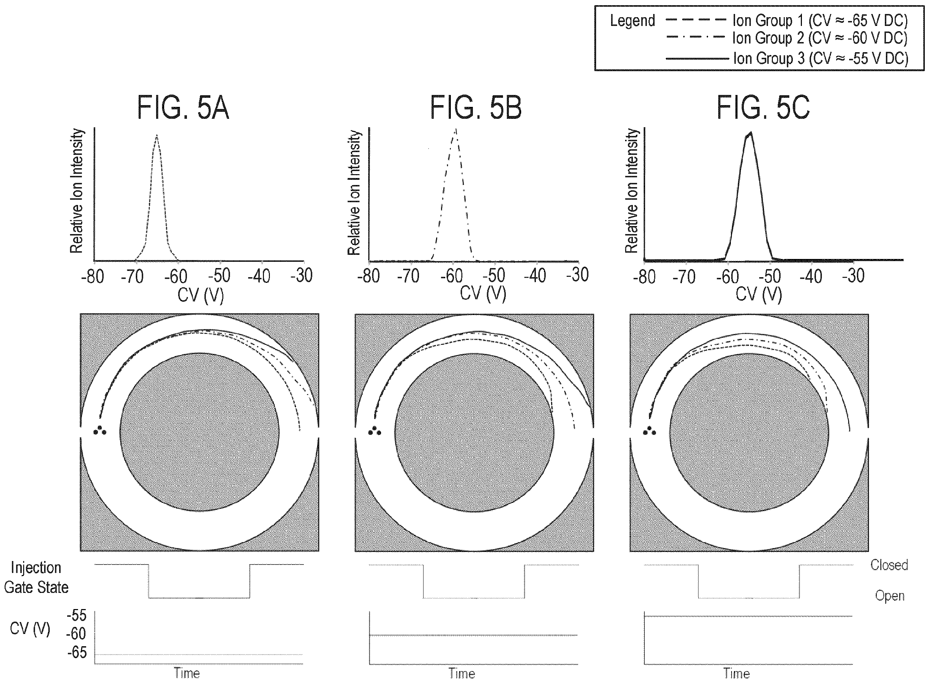

Ions produced by the ion source then enter FAIMS device 108. In the depicted example, FAIMS device 108 includes a FAIMS cell with cylindrical inner and outer electrodes having radially opposed surfaces, which define there between an annular separation region (an "analytical gap") through which the ions are transported. This type of FAIMS cell geometry, which is depicted in cross-section in FIGS. 5A-C and 7-9, may be generally referred to as a "side-to-side FAIMS cell", in which the longitudinal axes (axes of cylindrical surfaces, directed out of the page) of inner electrode and outer electrode are oriented transversely with respect to the overall direction of ion flow. However, the FAIMS cell can also have the flat-plate geometry discussed above, or another geometry/relative electrode arrangement, without departing from the scope of this disclosure. The principles of the design and operation of FAIMS cells and other ion mobility spectrometry devices have been extensively described elsewhere in the art, and hence will not be described in detail herein. See, for example, U.S. Pat. No. 6,639,212 to Guevremont et al., U.S. Pat. No. 10,325,767 to Prasad et al., and U.S. Pat. No. 11,293,898 to Prasad et al., which are incorporated herein by reference. In brief, a carrier gas flows with the ions through a separation region from an inlet orifice of the FAIMS device to an exit orifice of the FAIMS device. Ion separation is carried out within the separation region (analytical gap) of the FAIMS device by applying an asymmetric waveform having a peak voltage (DV) and a CV to one of the inner or outer electrodes. The values of CV and DV are set to allow transmission of a selected ion species through the separation region. Other ion species having different relative values of high field and low field mobilities will migrate to the surface of one of the electrodes and be neutralized.

The selected ions emerge from the FAIMS device through an exit orifice and pass through a small gap separating the FAIMS device from a mass spectrometer 116. Whereas most of the carrier gas exhausts through the gap at atmospheric pressure, ions are electrostatically guided into at least one reduced pressure chamber 118 of the mass spectrometer 116 through an orifice in the mass spectrometer or through a capillary inlet or ion transfer tube. The at least one reduced pressure chamber 118 may be evacuated by a vacuum port. From the at least one reduced pressure chamber 118, ions are transferred (e.g., through an orifice of a skimmer) into a high vacuum chamber 120 maintained at a low pressure (typically around 100 millitorr) relative to the reduced pressure chamber 118. The high vacuum chamber 120 can be evacuated by turbo or similar high-vacuum pumps via a vacuum port.

The ions transferred into high vacuum chamber may be focused or guided through an electrical injection gate 122 into a mass analyzer 124 for mass analysis. In some examples, injection gate 122 is part of an ion optical assembly which includes various electrodes forming ion lenses, ion guides, ion gates, quadrupole or octopole rod sets, etc. When a closing voltage is applied to the injection gate, ion transfer into the mass analyzer is blocked. The closing voltage can be pulsed down to a lower opening voltage for some amount of time (referred to herein as the "opening period" of the injection gate), to allow ions to enter the mass analyzer. Mass analyzer 124 may be implemented as any one or a combination of conventional mass analyzers, including (without limitation) a quadrupole mass analyzer, ion trap, or time-of-flight analyzer. While mass analyzer 124 is depicted within high-vacuum chamber 120, it may be located elsewhere in other examples. After the ions transmitted to the mass analyzer via the open injection gate are analyzed, a controller 126 in communication with the mass analyzer generates data based on the analysis that can be used to generate a mass spectrum.

### Limitations of Typical FAIMS Experiments

In a typical FAIMS experiment, only one CV value is applied during the time the mass spectrometer injects ions into the mass analyzer (e.g., during a single opening period of the injection gate). The ions associated with this single CV fraction fill the mass analyzer and produce a mass spectrum with reduced chemical interference. However, ions that do not transmit at that CV setting will be lost to the FAIMS electrodes and cannot be identified. As a result, a single-CV experiment may result in the same number of identified ion species, or possibly even fewer identified ion species, as compared to the same experiment performed with a mass spectrometer without FAIMS.

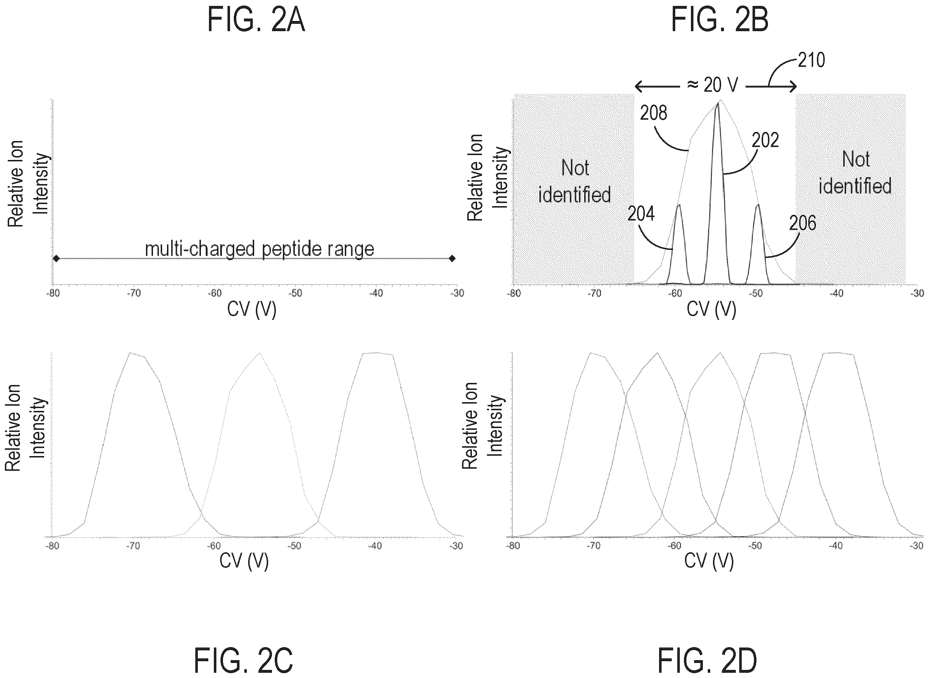

In the example shown in FIG. 2A, the full cohort of multiply-charged peptides are transmitted over an approximately 50 V CV range (between -30 V and -80 V). During a proteomics experiment, the CV can be set within the -30 V to -80 V range to produce enhanced signal-to-noise spectra for subsequent interrogation by post-acquisition software to determine individual PSM, peptide, and protein distribution. In other examples, however, multiply-charged peptides may be transmitted over a different CV range (*e.g*., between -30 and -100 V). In contrast, singly-charged peptides are typically transmitted in the range between 0 V and -30 V, and any multiply-charged peptides that transmit in this range tend not to be analytically valuable.

Using standard FAIMS parameters, a single CV setting will transmit ion current over approximately 20 V of CV. The resulting CV fraction transmitted by the FAIMS will eliminate the unwanted singly-charged ions from a different CV region. However, it will also exclude CV fractions consisting of the remaining 75% of peptidic ion current. For example, as shown in FIG. 2B, a single CV setting of -55 V transmits ion current over the range of approximately -45 V to -65 V, while excluding CV fractions associated with compensation voltages lower than approximately -65 V and greater than approximately -45 V. In particular, ion detection peak 202 represents ions that transmit at a CV of -55 V; a large percentage (*e.g.,* 100%) of these ions can be transmitted by the FAIMS device during the experiment. In contrast, ion detection peaks 204 and 206 that are attenuated relative to peak 202 represent ions that transmit at -60 V and -50 V, respectively. Only some of the ions of ion detection peaks 204 and 206 (*e.g.,* 50%) are transmitted during an experiment with the static CV setting of -55 V, as many are lost due to having different differential mobilities, an unsuitable initial energy or velocity, *etc.* As shown, a static acceptance curve 208 for the experiment can correspond to the envelope that encompasses peaks 202, 204, and 206. In this instance, static acceptance curve 208 has an acceptance width of approximately 20 V, as shown at 210.

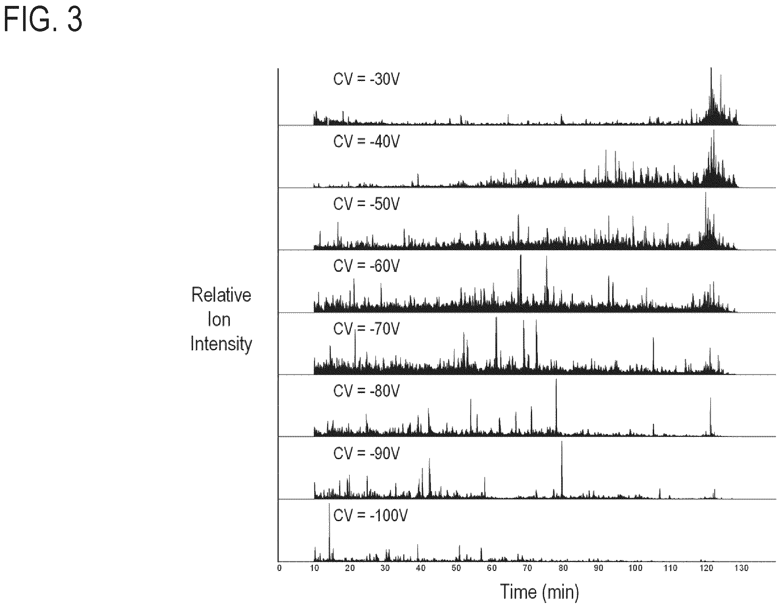

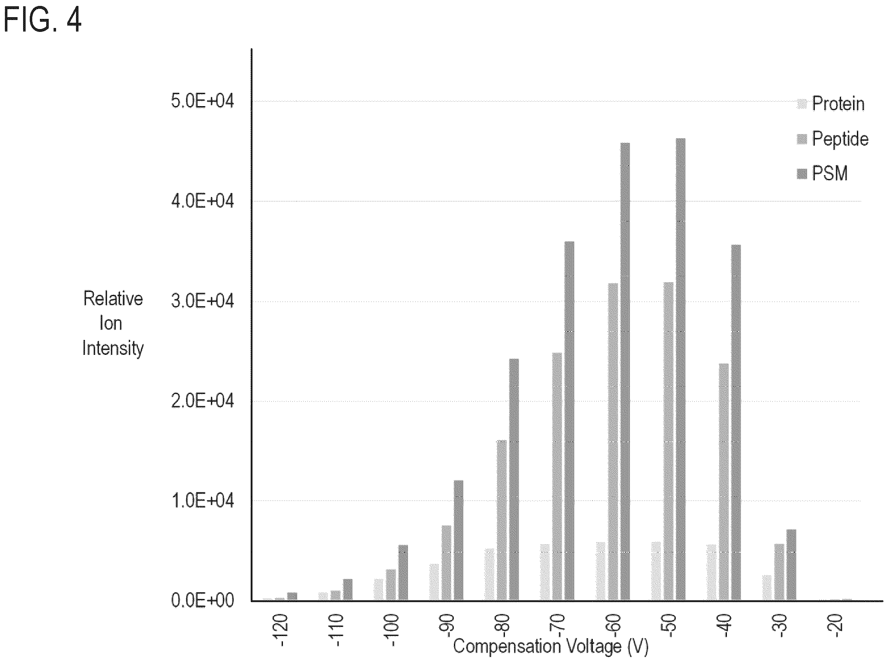

In an attempt to increase the quantity of ion species (*e.g.,* peptides) identified, multiple scans (also referred to as "runs" or "experiments") can be performed by the mass analyzer, with each scan utilizing a different static CV applied to the FAIMS electrode. Such operation may also be described as "scanning through multiple CV values" or "sweeping the CV." The results of the scans of the ions transmitted at the different static CVs can then be processed together, as shown in FIGS. 3 and 4. In particular, FIG. 3 is a graph of a HeLa chromatogram digest run at different static CV values. The CV values for the experiments were selected within the range of - 30 V to - 100 V; during a typical proteomics experiment, the static CV is set within a range of voltages that transmits multiply-charged peptidic ion current, generally between -30 V and -100 V. As only one CV fraction can be analyzed per scan, the graph shown in FIG. 3 includes mass spectra from numerous scans plotted on the same plot. These mass spectra can subsequently be interrogated by post-acquisition software to determine individual PSM, peptide, and protein distribution among the ions analyzed, as shown in FIG. 4.

Similarly, FIGS. 5A-C illustrate the results of three separate scans with reference to three ion groups having different CV optima. While the terminology "ion group" is used in this example, each ion group can alternatively be referred to as an ion type, ion class, ion family, or CV fraction. Each ion group can include numerous ion species, *e.g.,* hundreds or thousands of ion species. One example of an ion species is a peptide; however, other ion species may be analyzed without departing from the scope of this disclosure.

As shown in FIG. 5A, the ions of ion group 1 are transmitted through the FAIMS electrodes at a CV of -65 V. However, the ions of ion groups 2 and 3 are undercompensated for at this CV, resulting in their collision with the outer electrode before arriving at the exit. Accordingly, the resulting mass analysis shown consists only of ions from ion group 1. As shown in FIG. 5B, when the CV is increased to -60 V, the ions of ion group 1 are now overcompensated and are discharged on the inner electrode. The ions of ion group 2 are properly compensated for and thus are transmitted, while the ions of ion group 3 remain undercompensated for and impact the outer electrode. As shown in FIG. 5C, when the CV is set to -55 V, the ions of ion group 3 are transmitted, whereas the others are over-compensated and lost. In each of the cases above, the associated graph of transmitted ion intensity shows transmission of only the ion type that was properly compensated for, without any chemical background contributed by the other ion types. As shown, in each of FIGS. 5A-C, the graph of the relative ion intensity resulting from the application of the static CV has a shape similar to a Gaussian curve.

In other examples, the FAIMS device can internally switch between (*e.g.,* consecutively apply) multiple static CVs within the same scan such that ions can be filtered through the FAIMS device in accordance with their relative mobilities. In such approaches, if the static CVs applied do not include a CV associated with a given ion type, then the FAIMS device effectively acts as a filter for that ion type. When internally switching CVs, it is important to select voltages that are sufficiently spaced so that the gas phase fractions transmitted have limited overlap. For example, a three-CV approach using -40 V, -55 V, and -70 V CV fractions being introduced into the mass analyzers in a loop during a single scan is shown in FIG. 2C. Introducing more CV fractions, like the CV fractions associated with the five CVs shown in FIG. 2D, provides even more coverage of this region. However, there is a timing delay associated with setting the CV that makes setting additional static CVs beyond three prohibitive for a single scan.

To overcome some of these drawbacks, techniques are disclosed herein for instead applying a dynamic CV during a single experiment. In examples of disclosed technology discussed further hereinbelow, the CV applied to a FAIMS electrode can be dynamically varied throughout a single opening period of an injection gate of a mass spectrometer. Ions of adjacent CV fractions can thereby be transmitted to a mass analyzer of the mass spectrometer to be analyzed collectively in a single scan. Disclosed methods can be applied to systems for mass spectrometry which utilize a FAIMS device, or another type of IMS device. When used with a FAIMS device, the example techniques described below can allow users to obtain additional ion species identifications from CV fractions immediately adjacent to the original CV setting via a single scan. Further, multiple such scans can be performed to collect ion current more efficiently across the entire CV range.

### Example Techniques for Combining Adjacent CV Fractions in a Single Scan

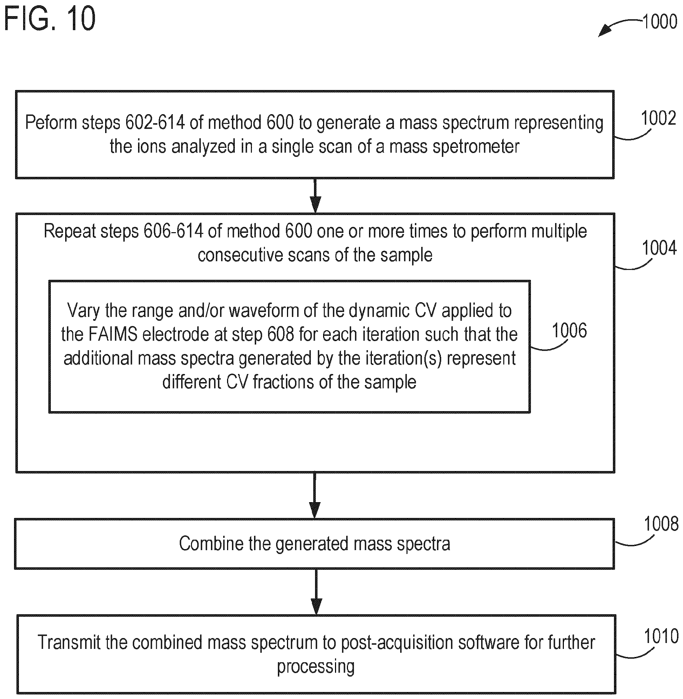

Techniques for varying the CV applied to a FAIMS electrode to combine ions of adjacent CV fractions and transmitting these ions to be analyzed in a single scan of a mass analyzer are described herein. As noted above, FAIMS has traditionally been used to exclude ions from a given ion pool, to interrogate deeper into that pool; accordingly, the techniques disclosed herein may seem counterintuitive as they intentionally decrease the resolution of the separation technique by admitting more than one CV fraction into the mass analyzer per scan. However, the combination of the large storage capacity of state-of-the-art ion trapping devices used in mass spectrometers (*e.g.,* those described in U.S. Pat. No. 11,293,898 to Prasad et al.) and the attenuated ion current associated with fractionation techniques makes it possible to combine adjacent CV fractions to increase the number of targets (*e.g.,* in a data-dependent proteomics experiment). Employing the proposed techniques will allow users to continue to reap the benefit of the FAIMS electrodes keeping the mass spectrometer clean, with the added benefit of additional ion species identifications from CV fractions immediately adjacent to the original setting. Additionally, users that want to increase total ion species coverage of their sample could use multi-fraction fills to more efficiently collect ion current across the entire CV range (*e.g.,* as discussed below with reference to FIG. 10).

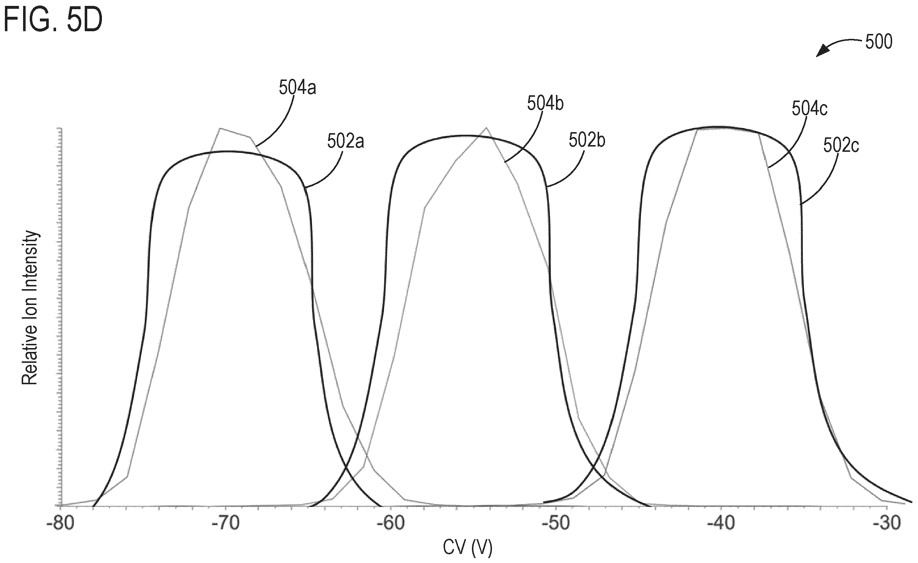

FIG. 5D depicts a graph 500 comparing the results of three mass analyzer scans using dynamic CVs (characteristics 502a-c) with the results of three mass analyzer scans using static CVs (characteristics 504a-c). The results of the three static CV scans shown at 504a-c are identical to those shown in FIG. 2C. Similar to the graphs of relative ion intensity shown in FIGS. 5A-C, characteristics 504a-c have a shape similar to a Gaussian curve. In contrast, characteristics 502a-c have wider, rounded peaks which are flattened somewhat relative to the peaks of characteristics 504a-c. The widening of the peaks reflects the increased number of individual ion species transmitted in each of the dynamic CV scans as compared to the static CV scans. In various disclosed examples, dynamic variation of CV can be applied for a single mass analyzer scan to increase a full-width half maximum (FWHM) of mass analyzer scan measurements of ion intensity with respect to compensation voltage. In some examples, increases of 5%, 10%, 25%, 50%, 100%, 200% or more, can be obtained relative to a similar scan measurement using a fixed compensation voltage. Increases can be used to broaden and/or tailor a range of collected ion species.

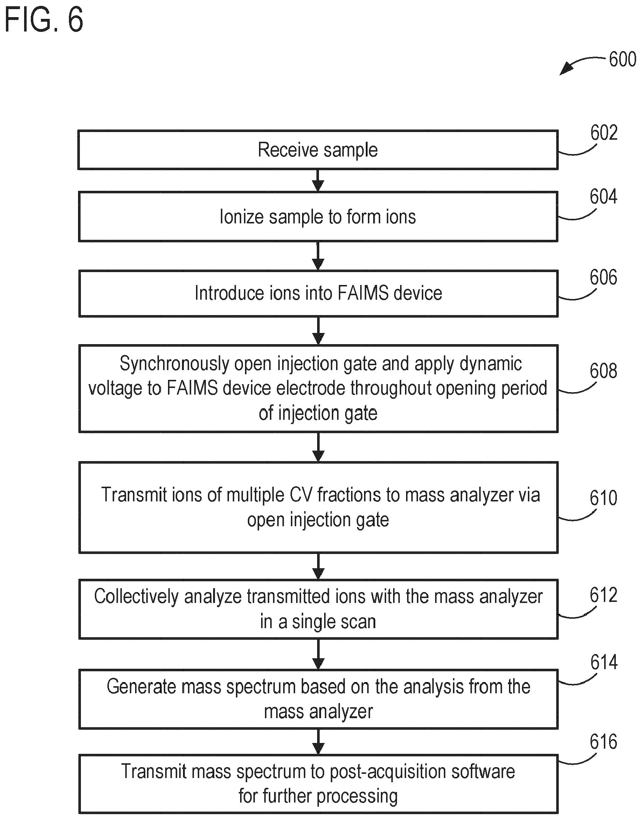

FIG. 6 illustrates an example flowchart of a method 600 for operating a system including a FAIMS device and a mass spectrometer, such as system 100 of FIG. 1. The actions of method 600 can be performed by a controller, such as controller 126 of FIG. 1, in conjunction with the other components of the system such as the FAIMS device and the mass spectrometer.

At 602, a sample is received by the mass spectrometer. In some examples, the sample is a biological sample containing one or more peptides. For example, the sample can be a peptide separated from other peptides (and other components) in a mixture using liquid chromatography (LC), gas chromatography (GC), capillary electrophoresis (CE), or another type of system used to separate components of a mixture. In the example of proteins subject to digestion, the separate components of the mixture are peptides (*e.g.,* fragments of the protein). While biological samples are described herein for exemplary purposes, the disclosed techniques can be used with other types of samples without departing from the scope of this disclosure.

At 604, the sample is then ionized to form ions. The ionization can be performed by an ionization source such as ion source 104 of FIG. 1. Ionization of the sample produces both singly-charged ions and multiply-charged ions. The ions produced by the ion source are then introduced into a FAIMS device, such as FAIMS device 108 of FIG. 1, at 606. In particular, the ions are introduced into an analytical gap between the electrodes of the FAIMS device.

At 608, the injection gate of a mass spectrometer is opened and a dynamic CV is applied to the FAIMS device electrode throughout an opening period of the injection gate. These actions are performed synchronously: for example, the opening of the injection gate occurs at the same time as, or in a predetermined relation to, an initial application of the dynamic CV, and the dynamic CV continues to be applied (*e.g.,* the CV continues to be varied dynamically) until the injection gate is closed or in a predetermined relation to closure of the injection gate. In some examples, dynamic variation throughout an opening period can include one or more periods of constant voltage. The injection gate can be an electrical gate arranged within a high-vacuum chamber of the mass spectrometer, such as injection gate 122 of FIG. 1. Opening the injection gate can include lowering a voltage applied to the injection gate from a first, higher potential to a second, lower potential for a duration, and then returning the voltage applied to the injection gate back to the first, higher potential once the duration has elapsed. Meanwhile, the CV can be continuously varied through a range of voltages which includes CVs associated with more than one CV fraction. An exemplary representation of the synchronous application of the dynamic CV and opening of the injection is shown graphically in FIG. 1 at 128. While the depicted example shows a ramp waveform, the dynamic CV applied during the opening duration of the injection gate can have a waveform with any shape that reflects the dynamic variance of the CV (*e.g.,* a triangle shape, a sawtooth shape, a wavelet shape, a sine wave, a stepped staircase, another shape, or a combination). In some examples, the waveform is selected such that its initial value is equal to its final value, e.g., for triangle, sawtooth, or wavelet waveforms, to advantageously reduce the time required for resetting the FAIMS device between repeated experiments.

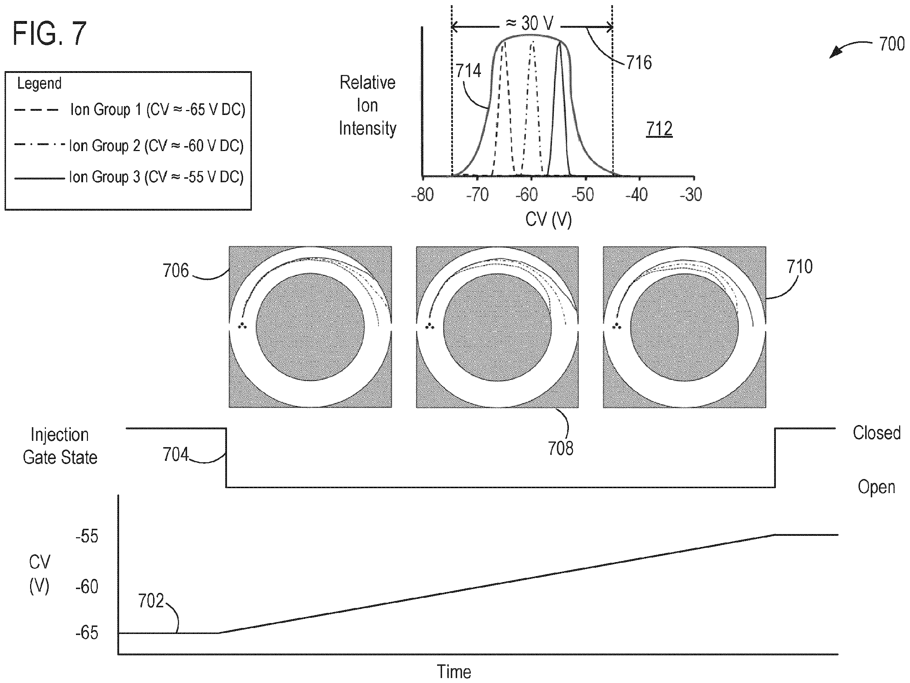

At 610, ions of adjacent CV fractions are transmitted to the mass analyzer via the open injection gate. A CV fraction for a given CV is alternatively referred to herein as an ion group/ion type/ion species/ion class/ion family associated with that CV and represents the ions which are transmitted by the FAIMS when the associated CV is applied to the FAIMS electrode. In some examples, the CV fraction associated with a CV is transmitted when the CV applied to the FAIMS electrode is within approximately 20 V of the CV associated with that CV fraction; in other examples, however, the "width" of the CV fraction associated with a given CV can be larger or smaller than 20 V. As discussed further below with reference to FIGS. 7-9, the dynamic CV applied to the FAIMS electrode varies over time over a range of values including CVs associated with multiple CV fractions, some of which are associated with adjacent CVs. The ions of the CV fractions associated with CVs in the range over which the dynamic CV is varied are transmitted from the open injection gate to the mass analyzer.

At 612, the mass analyzer collectively analyzes the transmitted ions in a single scan. In particular, the multiple CV fractions that were transmitted into the mass analyzer while the injection gate was in an open state are analyzed together by the mass analyzer in a single experiment. At 614, a mass spectrum is generated based on the analysis performed by the mass analyzer. A controller (*e.g.,* controller 126 of FIG. 1) can receive a signal from the mass analyzer with the results of the analysis, and then generate a mass spectrum based on this data. An exemplary representation of a mass spectrum generated based on a single mass analyzer scan and including multiple CV fractions is shown graphically in FIG. 1 at 130. In some examples, characteristics of the generated mass spectra can be related to the dynamic CV waveform applied, *e.g.,* as a convolution of a static CV mass spectrum (often having a Gaussian shape) with the dynamic CV waveform.

At 616, the mass spectrum is transmitted to post-acquisition software for further processing. For example, the controller can transmit the generated mass spectrum (or multiple mass spectra generated via the depicted method) to post-acquisition software. The post-acquisition software may be hosted locally or remotely, and the generated mass spectrum can be transmitted to a computing device hosting the post-acquisition software via a wired or wireless connection. In some examples, the post-acquisition software includes code executable by the computing device for interrogating a mass spectrum to determine the individual PSM, peptide, and protein distribution within the mass spectrum.

FIGS. 7-9 illustrate the mass spectra generated by a system (*e.g.,* system 100 of FIG. 1) with reference to the same three ion groups depicted in FIGS. 5A-C, but now with dynamic CV settings synced in relation to the opening of the injection gate. In each of FIGS. 7-9, the ions in ion group 1 are transmitted from the FAIMS device into the mass analyzer via the open injection gate when the applied CV is within approximately 5 V of -65 V; the ions in ion group 2 are transmitted from the FAIMS device into the mass analyzer via the open injection gate when the applied CV is within approximately 5 V of -60 V; and the ions in ion group 3 are transmitted from the FAIMS device into the mass analyzer via the open injection gate when the applied CV is within the approximately 5 V of -55 V. In other examples, however, ions may be transmitted by a FAIMS device when a CV value within a different range of the ions' associated CV value is applied (*e.g.,* a range larger or smaller than 5 V). The range of CVs which effect transmission of a given ion species can alternatively be referred to as the "static acceptance envelope" for that ion species. In some examples, peptides may have relatively large static acceptance envelopes for an applied static CV (*e.g.,* a FWHM of approximately 20 V), whereas smaller molecules may have relatively small acceptance envelopes (*e.g.,* a FWHM of approximately 5 V).

Further, while the dynamic CVs depicted in FIGS. 7-9 vary within a 10 V range, this value was chosen for the sake of example and is not intended to be limiting; the range of the dynamic CV applied to the FAIMS electrode can be larger or smaller than 10 V in other examples.

FIG. 7 depicts an example 700 in which a dynamic CV with a ramp waveform is applied to a FAIMS electrode during the opening period of the injection gate. The CV value over time is shown in graph 702, and the injection gate state is shown in graph 704. As shown in graph 702, the applied CV is dynamically (*e.g.,* continuously) varied from an initial voltage of -65 V to a final voltage of -55 V during the opening period of the injection gate, thereby effecting transmission of ion current into the mass analyzer from ion groups (*e.g.,* CV fractions) associated with CVs within the range of -65 V to - 55 V, or ±5 V of that range. This in turn causes the mass analyzer (and thus, the mass analyzer scan matrix) to be filled with ions from all three ion groups.

Graph 712 depicts the relative ion intensity of the CV fractions transmitted into the mass analyzer upon application of the ramp-shaped dynamic CV waveform shown in graph 702. In particular, graph 712 shows a respective ion identification peak for each of the three ion groups. These peaks form a dynamic acceptance curve 714. The width of dynamic acceptance curve 714 defines an acceptance range 716 for the experiment of approximately 30 V. CV fractions that transmit at voltages outside of the bounds of acceptance range 716 are not identified in this scan, as the dynamic waveform applied during the injection period for the scan does not include their associated CVs. While as shown the acceptance range 716 endpoints corresponds to a substantially zero relative ion intensity, other measures may be used, such as FWHM. As shown in cross-sectional view 706 and graph 712, ions in ion group 1 are transmitted from the FAIMS device into the mass analyzer via the open injection gate as the CV dynamically ramps up from -65 V to approximately -62.5 V. As shown in cross-sectional view 708 and graph 712, as the CV continues to increase from -62.5 V to approximately -57.5 V, ions from ion group 2 are transmitted from the FAIMS device into the mass analyzer via the open injection gate; ions from ion group 1 are no longer transmitted. As shown in cross-sectional view 710 and graph 712, as the CV is dynamically varied from approximately -57.5 V to -55 V, the ions from ion group 3 are transmitted from the FAIMS device into the mass analyzer via the open injection gate; ions from Ion Groups 1 and 2 are no longer transmitted. In view of the adjacency of the CVs which cause transmission of their ions, Ion Groups 1 and 2 may be referred to as "adjacent" CV fractions, as can Ion Groups 2 and 3. In contrast, Ion Groups 1 and 3 may not be considered as adjacent CV fractions. While three ion detection peaks are shown in graph 712 for the sake of example, it will be appreciated that any additional ion species injected into the FAIMS device during the experiment that transmit at CVs within the acceptance range 716 will also be transmitted. Further, while an ascending ramp waveform is depicted in FIG. 7, a descending waveform can alternatively be used without departing from the scope of this disclosure.

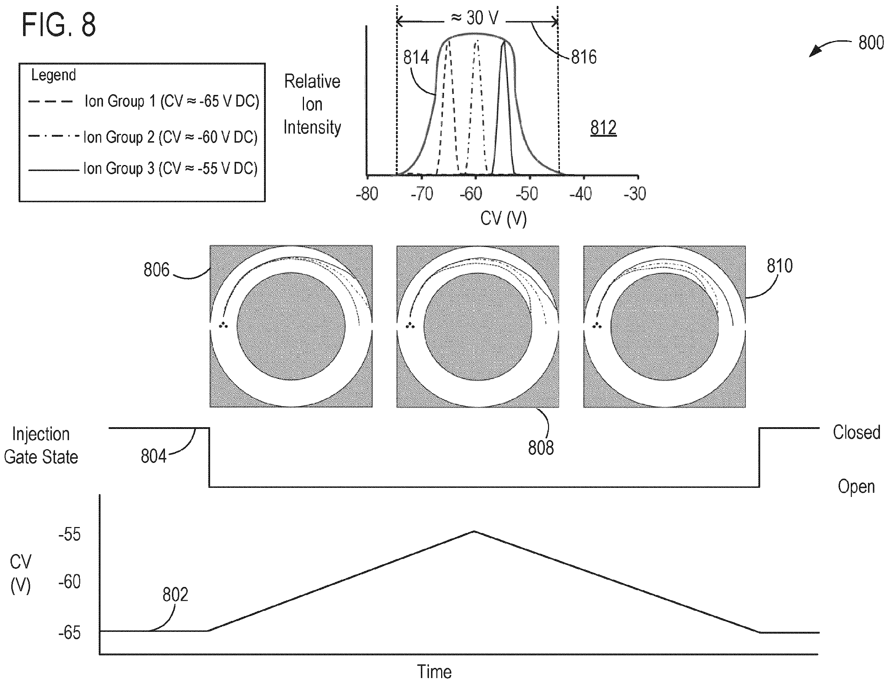

In example 800 shown in FIG. 8, the dynamic CV applied to the FAIMS electrode during the opening period of the injection gate has a triangle waveform (in particular, a single period of a triangle waveform). The CV value over time is shown in graph 802, and the injection gate state is shown in graph 804. As shown in graph 802, a single period of a triangular waveform can be characterized as having a linear rise and fall, similar to a ramp, but reversing direction at the peak amplitude instead of resetting abruptly, such that it forms a triangular shape. Implementation of the dynamic CV in a triangular pattern allows for collecting ion fractions on either side of a centralized CV target but may possibly require additional cooling at the PCB level. The same may be true for a dynamic CV having a waveform corresponding to a single period of a sawtooth waveform. Similar to the triangle waveform, a single period of a sawtooth waveform can be characterized as having a linear ramp-up followed by an abrupt reset to its starting point (initial value), such that it resembles a tooth of a saw, and can be ascending or descending.

Graph 812 depicts the relative ion intensity of the CV fractions transmitted into the mass analyzer upon application of the triangle-shaped dynamic CV waveform shown in graph 802. In particular, graph 812 shows a respective ion identification peak for each of the three ion groups. These peaks form a dynamic acceptance curve 814. The width of dynamic acceptance curve 814 defines an acceptance range 816 for the experiment of approximately 30 V. CV fractions that transmit at voltages outside of the bounds of acceptance range 816 are not identified in this scan, as the dynamic waveform applied during the injection period for the scan does not include their associated CVs. In the example shown in cross-sectional view 806 and graph 812, ions in ion group 1 are transmitted from the FAIMS device into the mass analyzer via the open injection gate when the CV dynamically varies from -65 V to approximately -62.5 V (before reaching the peak of the waveform), as well as when the CV decreases from approximately -62.5 to -65 V. As shown in cross-sectional view 808 and graph 812, as the applied CV is ramped up from approximately -62.5 V to approximately -57.5 V (prior to reaching the peak of the waveform), as well as when the applied CV is ramped down from approximately -57.5 V to approximately -62.5 V, ions from ion group 2 alone are transmitted from the FAIMS device into the mass analyzer via the open injection gate. As shown in cross-sectional view 810 and graph 812, during the time the applied CV is dynamically varied from approximately -57.5 V to -55 V and then back down to -57.5 V after reaching the peak of the waveform, the ions from ion group 3 alone are transmitted from the FAIMS device into the mass analyzer via the open injection gate.

While three ion detection peaks are shown in graph 812 for the sake of example, it will be appreciated that any additional ion species injected into the FAIMS device during the experiment that transmit at CVs within the acceptance range 816 will also be transmitted.

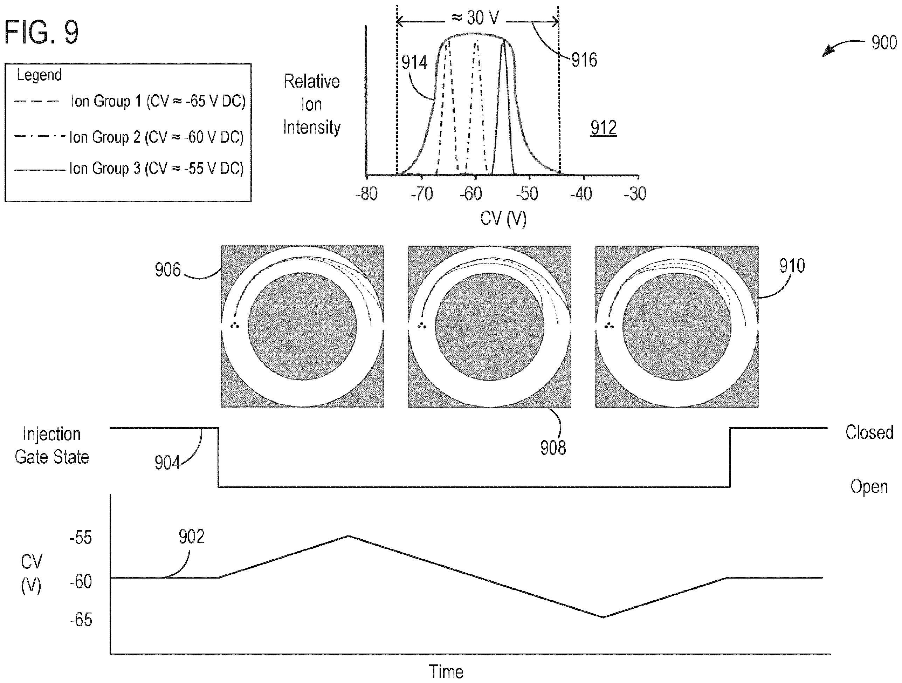

In example 900 shown in FIG. 9, the dynamic CV that is applied to the FAIMS electrode during the opening period of the injection gate has a waveform that can be described as a wavelet. The CV value over time is shown in graph 902, and the injection gate state is shown in graph 904. As shown in graph 902, a single period of the depicted wavelet waveform has equal initial and final values; after rising from the initial value to a peak, it falls down to a negative value having the same amplitude as the peak, and then rises back up to the final value. Put another way, in the depicted wavelet implementation, the mass spectrometer injection window starts and ends at a centralized CV target but briefly scans across a wider CV range in the middle of the window. Other types of wavelet waveforms can also be used without departing from the scope of this disclosure.

Graph 912 depicts the relative ion intensity of the CV fractions transmitted into the mass analyzer upon application of the wavelet-shaped dynamic CV waveform shown in graph 902. In particular, graph 912 shows a respective ion identification peak for each of the three ion groups. These peaks form a dynamic acceptance curve 914. The width of dynamic acceptance curve 914 defines an acceptance range 916 for the experiment of approximately 30 V. CV fractions that transmit at voltages outside of the bounds of acceptance range 916 are not identified in this scan, as the dynamic waveform applied during the injection period for the scan does not include their associated CVs. In the example shown in cross-sectional views 906-910 and graph 912, when the applied CV is ramped up from its initial value of -60 V to approximately -57.5 V, when it is ramped back down from -60 V to approximately -62.5 V (after reaching its peak value), and then when it is ramped back up from approximately -62.5 V to -60 V (after reaching the trough of the waveform), only the ions in ion group 2 are transmitted from the FAIMS device into the mass analyzer via the open injection gate. In contrast, when the applied CV is dynamically varied from approximately -57.5 V to the peak (-55 V) and then back down to approximately -57. 5 V, only the ions in ion group 3 are transmitted from the FAIMS device into the mass analyzer. Finally, when the applied CV is continuously decreased from approximately -62.5 V to the trough of the waveform (-65 V), and then increased back up to -62.5 V, only the ions in ion group 1 are transmitted from the FAIMS device into the mass analyzer.

While three ion detection peaks are shown in graph 912 for the sake of example, it will be appreciated that any additional ion species injected into the FAIMS device during the experiment that transmit at CVs within the acceptance range 916 may also be transmitted.

In each of the examples shown in FIGS. 7-9, the dynamic application of the CV can cause the ions in the three ion groups to continuously scan across the exit of the FAIMS electrodes. In contrast, in a FAIMS experiment in which static or discrete CV is applied, a minimum switching time is used every time the CV value is changed to clear the electrodes of unwanted ions before injecting into the mass spectrometer. This minimum switching time can be greatly reduced or even ignored when using dynamic-CV settings, because the adjacent CV fractions can be scanned directly into the mass spectrometer inlet. Further, as shown, using a dynamic CV rather than a static CV when performing one or more scans can advantageously result in a wider acceptance curve. For example, whereas the acceptance curve for static CV experiments may be approximately 20 V, as shown in FIG. 2B, dynamic CV experiments may achieve an acceptance curve of approximately 30 V, as shown in FIGS. 7-9. The specific acceptance curve width values discussed herein are selected for exemplary purposes only and are not meant to be limiting.

In addition to the exemplary waveforms shown in FIGS. 7-9, other dynamic-CV settings and shapes are contemplated. For example, the applied dynamic CV can have a sinusoidal waveform, a waveform with multiple periods (*e.g.,* more than one period of a triangle, sawtooth, ramp, wavelet, or sine wave).

### Example Techniques for Generating Mass Spectra Based on Multiple Scans Each Combining Multiple CV Fractions

The amount of time an ion spends in the presence of a particular CV value, also known as the ion's CV dwell time, may be attenuated when a dynamic-CV setting is used as compared to a static-CV setting. In some examples, this reduced dwell time can be mitigated by performing multiple consecutive scans, each using the dynamic CV setting (as compared to cycling through multiple static-CV loops). Increasing the number of FAIMS scans across the LC peak should improve quantitation as well as increasing the qualitative analysis (*e.g.,* PSM/peptide/protein identification).

In some examples, users of a FAIMS device can provide input via a user interface which indicates a desired number of experiments to perform for a given injection of ions into the FAIMS device, or input which specifies multiple CV fractions to perform experiments on. Whereas traditional approaches for performing multiple such experiments involved setting multiple static CVs ("set points"), one per desired experiment or CV fraction, the inventor herein has recognized that it can be advantageous to instead utilize dynamic-CV settings for each experiment. For example, instead of setting a set point for each of two consecutive experiments, a range can be set for each of the experiments, where each range includes only CVs which will transmit the desired CV fraction. In some examples, the range can be input by a user of the FAIMS device, e.g., via a user interface. In other examples, the range to be set can be determined by a controller based on user input or other data.

FIG. 10 illustrates an example flowchart 1000 for operating a system including a FAIMS device and a mass spectrometer, such as system 100 of FIG. 1. The actions of flowchart 1000 can be performed by a controller, such as controller 126 of FIG. 1, in conjunction with the other components of the system such as the FAIMS device and the mass spectrometer.

At 1002, steps 602-614 of method 600 of FIG. 6 are performed to generate a mass spectrum representing the ions of a sample that were analyzed in a single scan of a mass spectrometer. As discussed above with reference to FIG. 6, these ions include multiple CV fractions, at least two of which are adjacent CV fractions.

At 1004, steps 606-614 of method 600 are repeated one or more times in order to perform multiple consecutive scans of ions from the sample, with each scan using a dynamic-CV setting. As noted above, such operation can advantageously increase ion dwell times in the FAIMS device. As shown at 1006, the range and/or waveform of the dynamic CV applied to the FAIMS electrode at step 608 for each iteration is varied (relative to the dynamic CV applied for the first scan at 1002 and any other dynamic CVs applied during the iterations of method 600) such that the additional mass spectra generated by the iteration(s) represent different CV fractions of the sample. Put another way, the dynamic CV applied for each iteration of steps 606-614 is selected (*e.g.,* by the controller of the system) to transmit CV fractions different from those transmitted in any prior iterations for the sample. Varying the range of the applied dynamic CV relative to the applied dynamic CV in any prior iterations can include applying a dynamic CV which varies within a range which includes at least some CV values which are not included in a range of any dynamic CVs applied in a prior iteration. Similarly, varying the waveform of the applied dynamic CV relative to the applied dynamic CV in any prior iterations can include applying a dynamic CV with a waveform that is different from the waveform(s) of dynamic voltages applied in any prior iterations.

At 1008, the mass spectrum generated at 1002 is combined with the mass spectrum or mass spectra generated at 1004. For example, a controller (*e.g.,* controller 126 of FIG. 1) can combine the generated mass spectra into a single combined mass spectrum.

At 1010, the combined mass spectrum is transmitted to post-acquisition software for further processing. For example, the controller can transmit the combined mass spectrum to locally or remotely hosted post-acquisition software. As discussed above with reference to FIG. 6, the post-acquisition software can include code executable by the computing device for interrogating the combined mass spectrum to determining the individual ion species distribution (*e.g.,* PSM, peptide, and protein distribution) within the combined mass spectrum.

### Example Techniques for Selecting Between a Robustness Mode and a Coverage Mode for Operating a Mass Spectrometer with a FAIMS Device

In some instances, it may be advantageous for users of a mass spectrometer in conjunction with a FAIMS device to select between a robustness operating mode and a coverage mode. As noted above, utilizing FAIMS with a single CV setting in conjunction with a mass spectrometer to scan a sample may result in the identification of approximately the same number of, or possibly fewer, multiply-charged ions (*e.g.,* peptides) as compared to scanning the sample with the mass spectrometer without using FAIMS. Accordingly, it may seem counterintuitive to utilize FAIMS with a single CV setting. However, the inventors herein have recognized certain benefits of using FAIMS in this context which are unrelated to ion identification. In particular, certain structural features of FAIMS devices can advantageously block debris from entering the mass spectrometer, thereby keeping the mass spectrometer "clean" for a longer period of time and thus more robust (*e.g.,* able to stay operational longer without service). For example, the large electrodes within a FAIMS device (*e.g.,* the large inner electrode in a FAIMS device having a radial electrode arrangement) can physically block debris (*e.g.,* neutrals, solvent clusters, *etc*.) from entering the relatively pristine vacuum system within the mass spectrometer. In certain situations, users of a mass spectrometer may seek to obtain detailed information about a single ion type in a sample, as opposed to obtaining less-detailed information about multiple ion types. In such instances, in accordance with techniques disclosed herein, the users can adjust settings of a FAIMS device (*e.g.,* via an associated user interface) to select a robustness mode in which the CV applied to the FAIMS is varied, while the mass spectrometer injection gate is open, within a range of values that transmits a single CV fraction. In some examples, the range of values can span approximately 20 V and be centered on the CV associated with the CV fraction which the user wishes to analyze. In other examples, a different range smaller or larger than 20 V can be used. Operation in the robustness mode can advantageously reduce debris entering the mass spectrometer, while also providing the users with a desired detailed interrogation of the CV fraction associated with the selected CV setting. Operation in the coverage mode, which can alternatively be referred to as an increased identification mode, can increase ion identification (*e.g.,* yield more peptide targets) per CV relative to methods using multiple static CV settings. The coverage mode can replace typical operating modes which utilize multiple static CV settings within the same LC/MS run (one CV per MS scan, for each CV run in a loop). Experiments with dynamic CV settings would be set up similarly, but should yield more ion species targets per CV. Examples are contemplated in which dynamic CV settings can be optimized to interrogate the entire multiply-charged ion range with just a single input from the user.

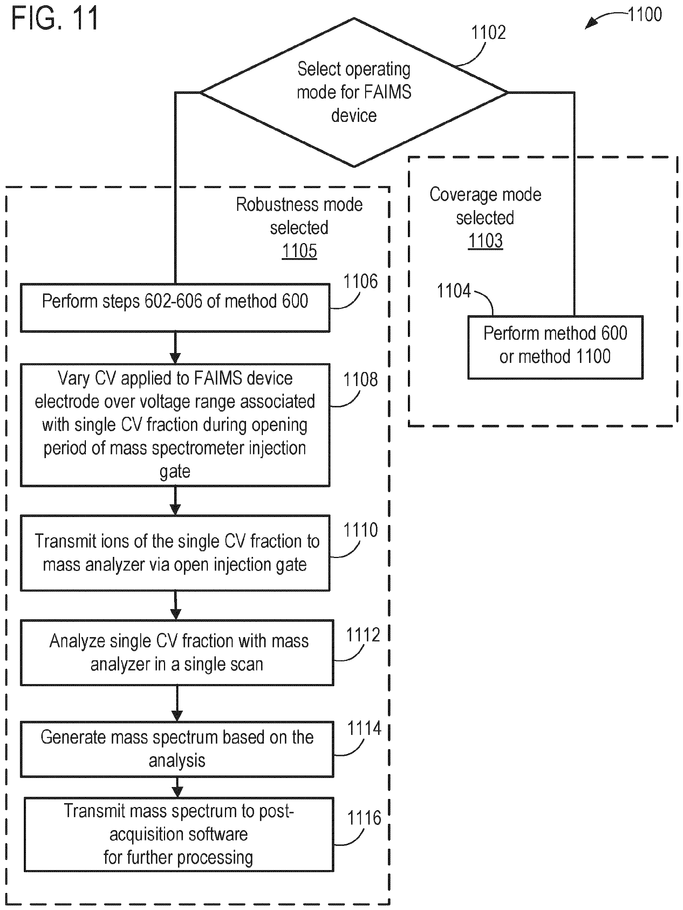

FIG. 11 illustrates an example flowchart of a method 1100 for selectively operating a system including a FAIMS device and a mass spectrometer in a robustness mode or a coverage mode. The actions of method 1100 can be performed by a controller, such as controller 126 of FIG. 1, in conjunction with the other components of the system such as the FAIMS device and the mass spectrometer. In some examples, the controller communicates with an input device, such as a keyboard, to receive user input indicating the desired mode (*e.g.,* via a user interface which also allows the user to input values for other parameters of interest). The user can input additional information such as the desired CV fraction to be transmitted, the CV associated with the desired CV fraction, a desired range over which to vary the CV during the injection period, a desired CV waveform, *etc*.)*.*

At 1102, an operating mode is selected for a FAIMS device. In some examples, a user selects the operating mode, *e.g.,* via a user interface. In other examples, a controller determines which operating mode to enact based on parameters input by a user.

At 1103, a coverage mode is selected. As discussed above, the coverage mode can be enacted to prioritize the quantity of ions identified. At 1104, operating the FAIMS device in the coverage mode includes performing either method 600 of FIG. 6 or method 1100 of FIG. 11. In examples where a relatively thorough interrogation of a few CV fractions is desired, method 600 may be preferred. In contrast, in examples where a less thorough interrogation of numerous CV fractions is desired, method 1100 may be preferred. The determination of whether to perform method 600 or method 1100 may be made by the controller based on various parameters (*e.g.,* parameters input by a user), or a user may provide input that expressly indicates which method is preferred.

At 1105, a robustness mode is selected. As discussed above, the robustness mode can be enacted to reduce debris entering the mass spectrometer by transmitting only a single CV fraction to the mass analyzer for analysis. However, as discussed below, the voltage applied to the FAIMS electrode is dynamically varied over a range associated with the desired single CV fraction. Such operation advantageously provides for a more detailed analysis of the single CV fraction as compared to data obtained via static-CV settings.

At 1106, operating in the robustness mode includes performing steps 602-606 of method 600 of FIG. 6. At 1108, the CV applied to the FAIMS device electrode is dynamically varied over a voltage range associated with a single CV fraction during an opening period of the injection gate of the mass spectrometer. Put another way, rather than simply applying a static voltage pulse with the value of the CV, the voltage applied to the FAIMS electrode is continuously varied throughout the time the injection gate is open within a voltage range that transmits only the desired CV fraction. The dynamic CV can have a waveform with a ramp, triangle, sawtooth, or wavelet shape, or another waveform shape. In some examples, the voltage range over which the CV is varied during operation in the robustness mode is smaller than the voltage range over which the CV is varied during operation in the coverage mode. In other examples, however, the voltage range over which the CV is varied during operation in the robustness mode has the same width as, or is larger than, the voltage range over which the CV is varied during operation in the coverage mode, despite only effecting transmission of a single CV fraction. For example, during operation in the coverage mode, a relatively narrow voltage range can be used as long as it includes CVs associated with at least two different CV fractions.

At 1110, the ions of the designated single CV fraction are transmitted to the mass analyzer via the open injection gate. At 1112, the mass analyzer analyzes the ions of the single CV fraction in a single scan. At 1114, a mass spectrum is generated based on the analysis performed by the mass analyzer (*e.g.,* via a controller in communication with the mass analyzer). At 1116, the mass spectrum is transmitted to post-acquisition software for further processing (*e.g.,* in the manner described above for step 616 of method 600).

### Example Techniques for Trapping Ions

The techniques described herein for dynamically varying the CV applied to a FAIMS electrode may be used in conjunction with ion trapping techniques. In particular, ions may be collected in one or more ion traps between an ionization source and a mass analyzer. Release of the collected ions may be controlled such that only a fraction of the ions collected during a given ionization event are released at a time for mass analysis.

For example, referring to system 100 of FIG. 1, the mass spectrometer 116 may further include one or more ion traps disposed upstream of high-vacuum chamber 120 (e.g., between reduced pressure chamber 118 and high-vacuum chamber 120, or within reduced pressure chamber 118). The ion trap(s) can include, for example, a quadrupole ion trap or a linear ion trap. Alternatively, the mass analyzer may be an Orbitrap which incorporates the ion trap(s). In any case, the controller 126 or another controller may be configured to control the opening and closing of the ion trap(s) to collect and release ions from the ion trap(s) at a desired schedule. In particular, the ions output by the FAIMS device 108 during application of a dynamic CV to the FAIMS electrode may be collected in the ion trap(s) within the mass spectrometer 116, and the controller 126 may be operated to coordinate the opening time of the ion trap(s) and the injection gate 122 such that desired groups of ions are analyzed together by mass analyzer 124.

### Example Computing Environment

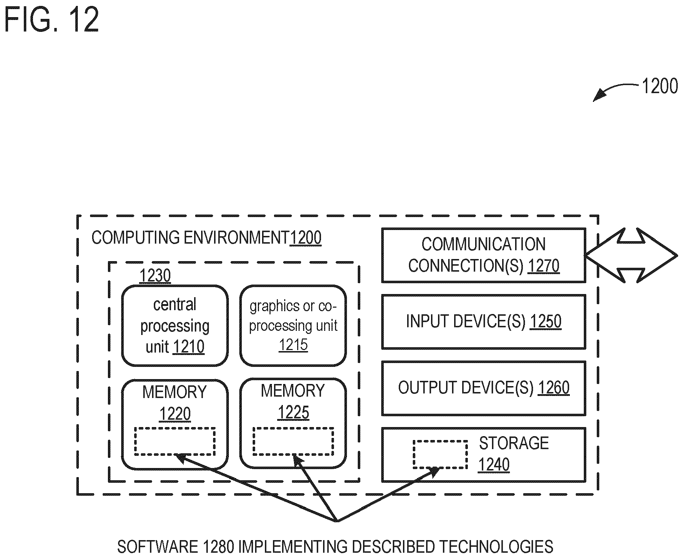

FIG. 12 depicts a generalized example of a suitable computing environment 1200 in which the described innovations relating to dynamically varying the CV applied to a FAIMS electrode may be implemented. The computing environment 1200 is not intended to suggest any limitation as to scope of use or functionality, as the innovations may be implemented in diverse general-purpose or special-purpose computing systems. For example, the computing environment 1200 can be any of a variety of computing devices (e.g., desktop computer, laptop computer, server computer, tablet computer, etc.).

With reference to FIG. 12, the computing environment 1200 includes one or more processing units 1210, 1215 and memory 1220, 1225. In FIG. 12, this basic configuration 1230 is included within a dashed line. The processing units 1210, 1215 execute computer-executable instructions. A processing unit can be a general-purpose central processing unit (CPU), processor in an application-specific integrated circuit (ASIC) or any other type of processor. In some examples, the controllers/controller circuits described herein are implemented by one or more such processing units. In a multi-processing system, multiple processing units execute computer-executable instructions to increase processing power. For example, FIG. 12 shows a central processing unit 1210 as well as a graphics processing unit or co-processing unit 1215. The tangible memory 1220, 1225 may be volatile memory (e.g., registers, cache, RAM), non-volatile memory (e.g., ROM, EEPROM, flash memory, etc.), or some combination of the two, accessible by the processing unit(s). The memory 1220, 1225 stores software 1280 implementing one or more innovations described herein, such dynamically varying the CV, ion gating, generating mass spectra, interrogating mass spectra with post-acquisition software, *etc.,* in the form of computer-executable instructions suitable for execution by the processing unit(s).

A computing system may have additional features. For example, the computing environment 1200 includes storage 1240, one or more input devices 1250, one or more output devices 1260, and one or more communication connections 1270. An interconnection mechanism (not shown) such as a bus, controller, or network interconnects the components of the computing environment 1200. Typically, operating system software (not shown) provides an operating environment for other software executing in the computing environment 1200 (*e.g.,* the FAIMS user interface and the post-acquisition software described herein), and coordinates activities of the components of the computing environment 1200.

The tangible storage 1240 may be removable or non-removable, and includes magnetic disks, magnetic tapes or cassettes, CD-ROMs, DVDs, or any other medium which can be used to store information in a non-transitory way and which can be accessed within the computing environment 1200. The storage 1240 stores instructions for the software 1280 implementing one or more innovations described herein, such as instructions that cause the FAIMS device to apply a dynamically varying CV to an electrode.

The input device(s) 1250 may be a touch input device such as a keyboard, mouse, pen, or trackball, a voice input device, a scanning device, or another device that provides input to the computing environment 1200. A user of the FAIMS device can use an input device such as input device(s) 1250 to enter desired parameter values for operation of the FAIMS. The output device(s) 1260 may be a display, printer, speaker, CD-writer, or another device that provides output from the computing environment 1200. In some examples, output devices(s) 1260 include a monitor or other screen which displays a user interface, and a user of the FAIMS device can enter desired parameter values for operation of the FAIMS device into fields of the user interface.

The communication connection(s) 1270 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier. For example, in the context of system 100 of FIG. 1, mass spectra generated by a controller circuit can be conveyed via communication connection(s) 1270 to another computing entity which hosts post-acquisition software for interrogating the mass spectra to determine individual ion species distribution (*e.g.,* PSM, peptide, and protein distribution) in a sample associated with the mass spectra.

### Example Implementations

Any of the following can be implemented.

Clause 1. A system, comprising: a field asymmetric-waveform ion-mobility spectrometry (FAIMS) device configured to receive ions from an ionization source, the ionization source configured to receive a sample and generate the ions from the sample; an injection gate configured to inject, when in an open state, ions transmitted by the FAIMS device into a mass analyzer; and a controller circuit configured to open the injection gate and apply a dynamic compensation voltage (CV) to an electrode of the FAIMS device while the injection gate is open.

Clause 2. The system of Clause 1, further comprising the ionization source; and a mass spectrometer comprising the mass analyzer and the injection gate.

Clause 3. The system of Clause 1 or 2, wherein the controller circuit is configured to apply the dynamic CV during an opening period of the injection gate with a time-varying voltage waveform.

Clause 4. The system of Clause 3, wherein the time-varying voltage waveform includes a ramp pattern, a triangle pattern, a sawtooth pattern, and/or a wavelet pattern.

Clause 5. The system of any one of Clauses 1-4, wherein the FAIMS device is configured to receive a plurality of CV fractions from the ionization source, wherein the FAIMS device is configured to transmit one of the CV fractions in response to application of an associated CV, and wherein the dynamic CV comprises respective CVs associated with more than one of the CV fractions such that the more than one of the CV fractions are transmitted while the injection gate is open.

Clause 6. The system of Clause 5, wherein the CV fractions associated with the plurality of CVs include adjacent CV fractions.

Clause 7. The system of Clause 5 or 6, further comprising the mass analyzer, wherein the mass analyzer is configured to collectively scan the ions of the plurality of CV fractions in a single scan, and wherein the controller circuit is configured to generate a mass spectrum representing the ions of the plurality of CV fractions based on scan data received from the mass analyzer.

Clause 8. The system of Clause 7, wherein the sample is a biological sample, and wherein the controller circuit is further configured to transmit the mass spectrum to post-acquisition software for determination of a peptide distribution of the biological sample.

Clause 9. A method, comprising: introducing ions from an ion source into a field asymmetric-waveform ion-mobility spectrometry (FAIMS) device; opening an injection gate of a mass spectrometer, the mass spectrometer coupled to an outlet of the FAIMS device; and while the injection gate is open, dynamically varying a compensation voltage (CV) applied to an electrode of the FAIMS device to transmit ions from the FAIMS device into a mass analyzer of the mass spectrometer.

Clause 10. The method of Clause 9, further comprising scanning the transmitted ions with the mass analyzer in a single scan.

Clause 11. The method of Clause 9 or 10, wherein the CV applied to the electrode while the injection gate is open has a waveform which begins at an initial voltage, ends at a final voltage, and varies between the initial voltage and the final voltage.

Clause 12. The method of Clause 11, wherein the initial voltage and the final voltage have the same value.

Clause 13. The method of Clause 12, wherein the waveform has a shape corresponding to a single period of a triangle waveform, a sawtooth waveform, or a wavelet waveform.

Clause 14. The method of any one of Clauses 11-13, wherein the initial voltage and the final voltage have different values.

Clause 15. The method of Clause 14, wherein the waveform has a ramp pattern.

Clause 16. The method of any one of Clauses 9-15, wherein the ions introduced into the FAIMS device comprise at least a first ion group and a second ion group, wherein the first ion group comprises ions that are transmitted by the FAIMS device when a CV within a predefined range of a first CV is applied, wherein the second ion group comprises ions that are transmitted by the FAIMS device when a CV within a predefined range of a second CV is applied, wherein the first and second CVs have different values, and wherein varying the CV applied to the electrode while the injection gate is open comprises continuously varying the CV over a range of values including the first CV and the second CV to effect transmission of the ions in the first and second ion groups into the mass analyzer while the injection gate is open.

Clause 17. The method of Clause 16, wherein scanning the transmitted ions further comprises, with the mass analyzer, collectively scanning the ions of the first and second ion groups in a single scan, and wherein the method further comprises, with a controller, receiving data from the mass analyzer including results of the single scan and generating a mass spectrum representing the ions of the first and second ion groups based on the received data.

Clause 18. The method of Clause 16 or 17, wherein the ions introduced into the FAIMS device further comprise one or more additional ion groups, wherein the ions of each additional ion group are transmitted by the FAIMS device when a respective associated CV is applied, and wherein the range of values over which the CV is varied while the injection gate is open further comprises the CVs associated with the additional ion group(s), thereby effecting transmission of the additional ion group(s) into the mass spectrometer while the injection gate is open.

Clause 19. A method for identifying peptides in a biological sample, comprising: at a field asymmetric-waveform ion-mobility spectrometry (FAIMS) device, receiving ions generated by an ionization source from a biological sample, the ions comprising a plurality of ion groups, and each ion group having an associated compensation voltage (CV) which, when applied to an electrode of the FAIMS device, causes the ion group to be transmitted by the FAIMS device; dynamically varying the CV applied to the electrode of the FAIMS device over a range of direct current (DC) voltages, the range including the CVs associated with at least two of the ion groups; opening an injection gate of a mass spectrometer while applying the varying CV to the electrode to effect transmission of the at least two ion groups into a mass analyzer of the mass spectrometer; with the mass analyzer, collectively scanning the at least two ion groups in a single scan; and with a controller, generating a mass spectrum based on results of the single scan, the generated mass spectrum representing the at least two ion groups.

Clause 20. The method of Clause 19, further comprising interrogating the mass spectrum with post-acquisition software to determine a peptide distribution of the biological sample.

Clause 21. The method of Clause 19 or 20, wherein the DC voltages within the range are greater than or equal to -100 V and less than or equal to 0 V.

Clause 22. The method of any one of Clauses 19-21, wherein opening the injection gate of the mass spectrometer while applying the varying CV to the electrode comprises maintaining the injection gate of the mass spectrometer in an open state while dynamically varying the CV applied to the electrode over the range of DC voltages.

Clause 23. The method of any one of Clauses 19-22, wherein the range of DC voltages is a first range, the method further comprising, after performing the single scan of the at least two ion groups, synchronously opening the injection gate of the mass spectrometer and continuously varying the CV applied to the electrode over a second range of DC voltages, the second range including the CVs associated with at least two other ion groups of the plurality of ion groups, to thereby effect transmission of the at least two other ion groups into the mass analyzer.

Clause 24. The method of Clause 23, wherein the single scan is a first single scan, and wherein the mass spectrum is a first mass spectrum, the method further comprising: with the mass analyzer, collectively scanning the at least two other ion groups in a second single scan; with the controller, generating a second mass spectrum based on the results of the second single scan, the second mass spectrum representing the at least two other ion groups; combining the first mass spectrum and the second mass spectrum into a third mass spectrum which represents the at least two ion groups and the at least two other ion groups; and interrogating the third mass spectrum with post-acquisition software to determine a peptide distribution within the at least two ion groups and the at least two other ion groups.

Clause 25. One or more non-transitory computer-readable media comprising computer-executable instructions for causing an apparatus to perform operations comprising: introducing ions from an ion source into a field asymmetric-waveform ion-mobility spectrometry (FAIMS) device; opening an injection gate of a mass spectrometer coupled with an outlet of the FAIMS device; and while the injection gate is open, applying a dynamic compensation voltage (CV) to an electrode of the FAIMS device to transmit ions of at least two adjacent CV fractions from the FAIMS device into a mass analyzer of the mass spectrometer.

Clause 26. A method for operating a field asymmetric-waveform ion-mobility spectrometry (FAIMS) device, comprising: operating the FAIMS device in a robustness mode in which a compensation voltage (CV) applied to an electrode of the FAIMS device is dynamically varied, during a single opening period of an injection gate of a mass spectrometer, within a first voltage range associated with transmission of only one CV fraction; and operating the FAIMS device in a coverage mode in which the CV applied to the electrode is dynamically varied, during a single opening period of the injection gate, within a second voltage range associated with transmission of more than one CV fraction.

Clause 27. The method of Clause 26, wherein the CV fractions associated with the second voltage range comprise at least two adjacent CV fractions.

### General Considerations

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

The systems, apparatus, and methods described herein should not be construed as limiting in any way. Instead, the present disclosure is directed toward all novel and non-obvious features and aspects of the various disclosed embodiments, alone and in various combinations and sub-combinations with one another. The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus. Additionally, the description sometimes uses terms like "produce" and "provide" to describe the disclosed methods. These terms are high-level abstractions of the actual operations that are performed. The actual operations that correspond to these terms will vary depending on the particular implementation and are readily discernible by one of ordinary skill in the art.

In some examples, values, procedures, or apparatus are referred to as "lowest", "best", "minimum," or the like. It will be appreciated that such descriptions are intended to indicate that a selection among many used functional alternatives can be made, and such selections need not be better, smaller, or otherwise preferable to other selections.

The disclosed techniques for applying a dynamic CV to a FAIMS electrode may be, for example, embodied as software or firmware instructions carried out by a digital computer. For instance, any of the disclosed techniques can be performed by a computer or other computing hardware (e.g., an ASIC or FPGA) that is part of an apparatus (*e.g.,* a mass spectrometer) which includes, or is used in conjunction with, a FAIMS device. The computer can be connected to or otherwise in communication with an ion analyzing device (*e.g.,* mass analyzer) and be programmed or configured to receive data from the ion analyzing device and use the data to generate mass spectra. The computer can be a computer system comprising one or more processors (processing devices) and tangible, non-transitory computer-readable media (e.g., one or more optical media discs, volatile memory devices (such as DRAM or SRAM), or nonvolatile memory or storage devices (such as hard drives, NVRAM, and solid state drives (e.g., Flash drives)). The one or more processors can execute computer-executable instructions stored on one or more of the tangible, non-transitory computer-readable media, and thereby perform any of the disclosed techniques. For instance, software for performing any of the disclosed embodiments can be stored on the one or more volatile, non-transitory computer-readable media as computer-executable instructions, which when executed by the one or more processors, cause the one or more processors to perform any of the disclosed techniques for applying a dynamic CV to a FAIMS electrode. The results of the computations can be stored (e.g., in a suitable data structure or lookup table) in the one or more tangible, non-transitory computer-readable storage media and/or can also be output to the user, for example, by displaying, on a display device, super-resolution images with a graphical user interface.

In view of the many possible embodiments to which the principles of the disclosed technology may be applied, it should be recognized that the illustrated embodiments are only representative examples and should not be taken as limiting the scope of the disclosure. Alternatives specifically addressed in these sections are merely exemplary and do not constitute all possible alternatives to the embodiments described herein. For instance, various components of systems described herein may be combined in function and use. We therefore claim all that comes within the scope of the appended claims.

## Claims

1. A system, comprising:
a field asymmetric-waveform ion-mobility spectrometry (FAIMS) device configured to receive ions from an ionization source, the ionization source configured to receive a sample and generate the ions from the sample;
an injection gate configured to inject, when in an open state, ions transmitted by the FAIMS device into a mass analyzer; and
a controller circuit configured to open the injection gate and apply a dynamic compensation voltage (CV) to an electrode of the FAIMS device while the injection gate is open.

2. The system of claim 1, further comprising
the ionization source; and
a mass spectrometer comprising the mass analyzer and the injection gate.

3. The system of claim 1 or claim 2, wherein the controller circuit is configured to apply the dynamic CV during an opening period of the injection gate with a time-varying voltage waveform.

4. The system of claim 3, wherein the time-varying voltage waveform includes a ramp pattern, a triangle pattern, a sawtooth pattern, and/or a wavelet pattern.

5. The system of any preceding claim, wherein the FAIMS device is configured to receive a plurality of CV fractions from the ionization source, wherein the FAIMS device is configured to transmit one of the CV fractions in response to application of an associated CV, and wherein the dynamic CV comprises respective CVs associated with more than one of the CV fractions such that the more than one of the CV fractions are transmitted while the injection gate is open.

6. The system of claim 5, wherein the CV fractions associated with the plurality of CVs include adjacent CV fractions.

7. The system of claim 5, further comprising the mass analyzer, wherein the mass analyzer is configured to collectively scan the ions of the plurality of CV fractions in a single scan, and wherein the controller circuit is configured to generate a mass spectrum representing the ions of the plurality of CV fractions based on scan data received from the mass analyzer.

8. The system of claim 7, wherein the sample is a biological sample, and wherein the controller circuit is further configured to transmit the mass spectrum to post-acquisition software for determination of a peptide distribution of the biological sample.

9. A method, comprising:
introducing ions from an ion source into a field asymmetric-waveform ion-mobility spectrometry (FAIMS) device;
opening an injection gate of a mass spectrometer, the mass spectrometer coupled to an outlet of the FAIMS device; and
while the injection gate is open, dynamically varying a compensation voltage (CV) applied to an electrode of the FAIMS device to transmit ions from the FAIMS device into a mass analyzer of the mass spectrometer.

10. The method of claim 9, further comprising scanning the transmitted ions with the mass analyzer in a single scan.

11. The method of claim 9, wherein the CV applied to the electrode while the injection gate is open has a waveform which begins at an initial voltage, ends at a final voltage, and varies between the initial voltage and the final voltage.

12. The method of claim 9, wherein the ions introduced into the FAIMS device comprise at least a first ion group and a second ion group,
wherein the first ion group comprises ions that are transmitted by the FAIMS device when a CV within a predefined range of a first CV is applied,
wherein the second ion group comprises ions that are transmitted by the FAIMS device when a CV within a predefined range of a second CV is applied,
wherein the first and second CVs have different values, and
wherein varying the CV applied to the electrode while the injection gate is open comprises continuously varying the CV over a range of values including the first CV and the second CV to effect transmission of the ions in the first and second ion groups into the mass analyzer while the injection gate is open.

13. The method of claim 12, wherein scanning the transmitted ions further comprises, with the mass analyzer, collectively scanning the ions of the first and second ion groups in a single scan, and wherein the method further comprises, with a controller, receiving data from the mass analyzer including results of the single scan and generating a mass spectrum representing the ions of the first and second ion groups based on the received data.

14. The method of claim 12, wherein the ions introduced into the FAIMS device further comprise one or more additional ion groups, wherein the ions of each additional ion group are transmitted by the FAIMS device when a respective associated CV is applied, and wherein the range of values over which the CV is varied while the injection gate is open further comprises the CVs associated with the additional ion group(s), thereby effecting transmission of the additional ion group(s) into the mass spectrometer while the injection gate is open.

15. The method of claim 12, wherein the range of values over which the CV is continuously varied is a range of direct current (DC) voltages, and wherein the DC voltages within the range are greater than or equal to -100 V and less than or equal to 0 V.

16. One or more non-transitory computer-readable media comprising computer-executable instructions for causing an apparatus to perform the method steps of any one of claims 9 to 15.
